(19) Europäisches Patentamt / European Patent Office / Office européen des brevets

(11) **EP 1 615 049 B1**

(12) **FASCICULE DE BREVET EUROPEEN**

(45) Date de publication et mention
de la délivrance du brevet:
**29.08.2007 Bulletin 2007/35**

(51) Int Cl.:
*G01S 15/52* *(2006.01)* *G01S 7/527* *(2006.01)*

(21) Numéro de dépôt: **05106156.2**

(22) Date de dépôt: **06.07.2005**

(54) **Traitement cohérent rapide pour codes à spectre de raies périodiques**

Schnelles kohärentes Verfahren für Kodierungen mit periodischen Linienspektren

Fast coherent treatment for codes with periodical line spectra

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.07.2004 FR 0407706**

(43) Date de publication de la demande:
**11.01.2006 Bulletin 2006/02**

(73) Titulaire: **Thales**
**92200 Neuilly Sur Seine (FR)**

(72) Inventeurs:
• **Doisy, Yves**
**94117 Arcueil Cedex (FR)**
• **Alinat, Pierre**
**94117 Arcueil Cedex (FR)**
• **Deruaz, Laurent**
**94117 Arcueil Cedex (FR)**
• **Masoni, Marc**
**94117 Arcueil Cedex (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
**US-A- 5 557 637** **US-B1- 6 314 053**

• CHAN F ET AL: "A non-linear phase-only algorithm for active sonar signal processing" OCEANS '97. MTS/IEEE CONFERENCE PROCEEDINGS HALIFAX, NS, CANADA 6-9 OCT. 1997, NEW YORK, NY, USA,IEEE, US, vol. 1, 6 octobre 1997 (1997-10-06), pages 506-511, XP010246296 ISBN: 0-7803-4108-2
• HERMAND J-P: "Model-based matched filter processing for delay-Doppler measurement in a multipath dispersive ocean channel" OCEANS '93. ENGINEERING IN HARMONY WITH OCEAN. PROCEEDINGS VICTORIA, BC, CANADA 18-21 OCT. 1993, NEW YORK, NY, USA,IEEE, 18 octobre 1993 (1993-10-18), pages I306-I311, XP010117412 ISBN: 0-7803-1385-2
• MIO K ET AL: "Space time adaptive processing for low frequency sonar" CONFERENCE PROCEEDINGS ARTICLE, vol. 2, 11 septembre 2000 (2000-09-11), pages 1315-1319, XP010521000

**Description**

Le domaine de l'invention est celui des procédés de traitements des signaux sonar. L'invention concerne plus particulièrement les échos sonar provenant d'objets insonifiés par des émissions sonar présentant un spectre dit « à peignes de raies » constitué de raies.

Une technique d'exploitation des signaux sonar, connue de l'art antérieur, consiste à émettre dans le milieu un signal connu et à traiter les signaux reçus par corrélation avec des signaux qui représentent des répliques du signal émis lorsqu'il est réfléchi par une cible mobile et reçu par le sonar. Ces répliques, ou copies Doppler, sont corrélées avec le signal réellement reçu de façon à distinguer le signal provenant de la cible du bruit ambiant et de la réverbération.

L'émission de signaux présentant un spectre de raies, c'est à dire un spectre constitué de raies distinctes, présente par ailleurs un grand intérêt pour la détection de cibles sous-marines mobiles ou faiblement mobiles dans un environnement limité par la réverbération. Elle permet en effet, pour peu que le décalage Doppler des cibles soit supérieur à la largeur des raies élémentaires du spectre, de réduire le bruit de réverbération par filtrage Doppler. Un tel procédé de filtrage Doppler est notamment décrit dans le brevet européen EP1078280 qui porte sur un procédé de détection d'objets mobiles au moyen d'un sonar actif.

Ce type de filtrage Doppler consiste à procéder à une corrélation multicopies du signal reçu. La corrélation multicopies consiste à effectuer de manière connue, des opérations de corrélation du signal reçu avec différentes répliques, ou copies Doppler, du signal émis. Chaque copie Doppler présente le même spectre que le signal réfléchi par un objet ayant une vitesse déterminée C'est pourquoi on parle de copies Doppler du signal émis.

Les opérations de corrélation sont effectuées simultanément ou encore au cours d'un même lapse de temps de sorte que l'exploitation, en sonar actif, d'émissions de signaux à spectre de raies conduit à effectuer autant d'opérations de corrélation simultanées que l'on exploite de filtres doppler. Aussi, lorsque le nombre de copies doppler employé est important, le mode de traitement par corrélation multicopies peut-il nécessiter une capacité de calcul importante.

Il est connu par ailleurs que pour des signaux dont le produit BT est important, supérieur à 50 par exemple, l'opération de filtrage doppler par corrélation peut être avantageusement effectuée dans le domaine spectral. Les lettres B et T du produit BT désigne respectivement B la bande du signal émis et T sa durée. En effet, le passage dans le domaine spectral, réalisé au moyen d'une Transformation de Fourier rapide (FFT) par exemple, se révèle plus avantageux, en terme de charge de calcul, qu'une corrélation directe dans le domaine temporel.

Néanmoins, lorsque la corrélation est effectuée avec plusieurs copies doppler, ce mode de réalisation du filtrage doppler conduit à une charge de calcul encore nettement trop importante. On rappel à ce propos que l'accroissement de la charge de calcul qu'implique un traitement multicopies est sensiblement proportionnel au nombre de copies employées. Dans la pratique le nombre de copies est de l'ordre de plusieurs dizaines, voire de quelques centaines. La demande de brevet français 03 04042 déposée en avril 2003 par la déposante et publiée sous la référence FR2853417 mentionne à ce propos, un nombre de copies doppler nécessaire au filtrage doppler supérieur à 200.

La présente invention consiste en un procédé permettant de réduire la charge de calcul occasionnée par la corrélation multicopies. A cet effet le procédé selon l'invention effectue une opération de corrélation multicopies qui comporte au moins les étapes suivantes:

- une étape réalisant la transformation temps-fréquence du signal reçu
- une étape de formation de spectres synthétiques, chaque spectre synthétique étant formé par le choix de certaines composantes spectrales du spectre du signal reçu et concaténation de ces composantes spectrales.
- une étape de calcul du produit inter-spectres, c'est à dire du produit de chaque spectre synthétique par le spectre conjugué concaténé de la copie doppler correspondante
- une étape de réalisation de l'opération de corrélation multicopies réalisant le produit du spectre conjugué concaténé de chaque copie doppler par le spectre synthétique du signal reçu correspondant.
- une étape réalisant la transformée fréquence-temps des produits inter-spectres obtenus, permettant de retourner dans le domaine temporel.

Le procédé selon l'invention présente l'avantage de n'effectuer la corrélation multicopies que sur les portions utiles des spectres. En éliminant les calculs inutiles, il permet ainsi de diminuer de manière sensible la quantité de calculs effectués, notamment lors des étapes de calcul d'inter-spectre et de transformation fréquence-temps. Il permet ainsi de diminuer la quantité globale de calculs effectués ou encore, pour une même quantité de calculs, d'effectuer une opération de filtrage doppler de meilleure résolution.

Le procédé selon l'invention présente en outre l'avantage d'être simple à mettre en oeuvre. Il est également particulièrement adapté aux systèmes émettant des ondes dont le spectre est constitué de raies périodiques, chaque raie ayant elle-même un spectre élémentaire.

D'autres caractéristiques et avantages apparaîtront au travers de la description illustrée par les figures associées qui représentent:

- La figure 1, la représentation temporelle d'un exemple de signal présentant un spectre de raies.
- La figure 2, la représentation spectrale schématique du signal illustré par la figure 1.
- La figure 3, une illustration des étapes principales d'un procédé classique de corrélation multicopies, la corrélation étant réalisée dans le domaine spectral.
- La figure 4, représente également une vue partielle du spectre de la figure 2 et de l'ensemble des canaux doppler définis par l'opération d'analyse fréquentielle réalisée sur le signal.
- La figure 5, la représentation spectrale concaténée du signal illustré par la figure 1.
- La figure 6, l'organigramme des principales étapes du procédé selon l'invention.

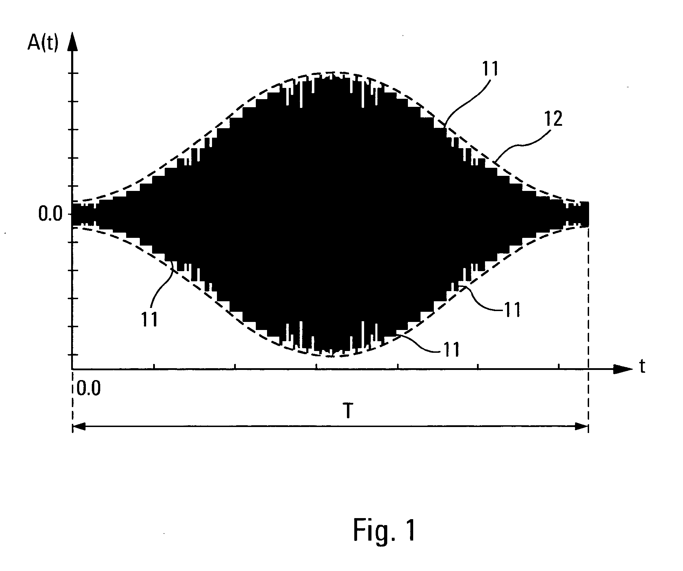

Comme il a été dit précédemment, le procédé selon l'invention s'applique en particulier aux systèmes sonar actifs émettant des ondes dont le spectre se présente comme une succession régulière, le long de l'axe fréquentiel, de spectres élémentaires ou raies. Pour la clarté de l'exposé, l'invention est décrite dans le document au travers d'un exemple de réalisation préférée, dans lequel l'onde émise se présente sous la forme d'impulsions constituées par la somme pondérée de N impulsions élémentaires successives modulées en fréquence selon une même loi, linéaire ou hyperbolique par exemple. Une illustration dans le domaine temporel d'une impulsion de ce type est présentée à la figure 1. Sur cette figure on peut distinguer les N impulsions élémentaires 11 dont l'amplitude est déterminée par la loi de pondération appliquée. Cette pondération détermine une enveloppe a(t) 12 et conditionne la forme du spectre de l'impulsion ainsi réalisée. Le signal formé, de durée T, est ainsi composé de N impulsions de durée T/N. La pondération appliquée à l'ensemble du signal a pour objet de contrôler la largeur de spectre du signal émis et, en particulier, de réduire le niveau des raies secondaires. Par suite, le signal émis peut être exprimé par la relation suivante:

$$e(t) = a(t) \sum_{n=0}^{N-1} p(t - n\frac{T}{N}) \qquad [1]$$

où p(t) est l'expression d'une impulsion élémentaire, p(t) étant égal à 0 pour t situé hors de l'intervalle [0 T/N]. Le signal a(t) représente la pondération appliquée. On parle d'enveloppe du signal.

Le spectre du signal émis peut quant à lui être exprimé par la relation suivante:

$$E(f) = A(f) * \sum_{n} P(f)\exp(-in2\pi f\frac{T}{N}) = \sum_{n} P(\frac{nN}{T})A(f - n\frac{N}{T}) \qquad [2]$$

Dans la relation [2], P(f) représente le spectre de l'impulsion élémentaire, qui peut s'exprimer par :

$$P(f) = \int p(t) \cdot \exp(-2i\pi ft)\, dt \quad [3].$$

De même, le spectre de l'enveloppe a(t) du signal émis peut s'exprimer par :

$$A(f) = \int a(t) \cdot \exp(-2i\pi ft)\, dt \quad [4]$$

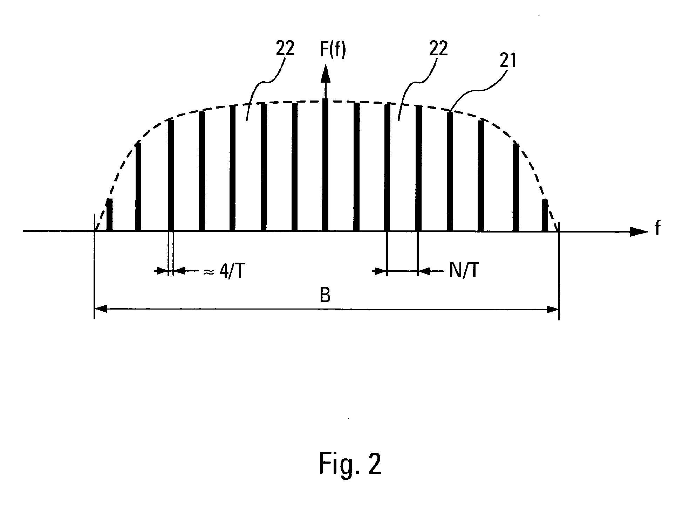

Le spectre E(f) est représenté schématiquement sur la figure 2. Il a pour extension la bande B de l'impulsion élémentaire. Il est constitué de raies 21 positionnées tous les n*N/T sur l'axe des fréquences.
La pondération d'amplitude a(t) a pour effet de limiter la largeur du spectre de chaque raie dans un intervalle de β/T autour de la fréquence centrale. Le facteur β représente un coefficient qui dépend de la loi de pondération d'amplitude a(t) choisie. Si on prend par exemple, selon une forme de réalisation préférée, a(t) = sin$^2$(πt/T), le coefficient β prendra la valeur β = 4.
L'illustration de la figure 2 permet de constater que le spectre du signal émis comporte BT/N plages de fréquences de largeur β/T, correspondant aux raies 21, pour lesquelles l'amplitude du spectre est notable, séparées par des plages de fréquence 22 de largeur sensiblement égale à N/T dans lesquelles l'amplitude des composantes spectrales est très faible. On peut également constater que ces plages d'amplitude très faible représentent une fraction importante de la bande du signal émis. Cette distribution particulière de l'amplitude du spectre est avantageusement mise à profit par le procédé selon l'invention

De façon générale, un moyen connu d'effectuer l'analyse doppler du signal reçu dans le domaine du traitement des échos sonar consiste à effectuer la corrélation du signal reçu avec des signaux représentant des copies du signal émis affectées d'un décalage fréquentiel ou d'un décalage en phase correspondant au décalage qu'aurait subi le signal émis lors de sa réflexion sur une cible en mouvement. Dans ce type de traitement par corrélation multicopies, le nombre de copies doppler utilisé est fonction de la plage de fréquence que l'on souhaite analyser et de la résolution du code. Ce nombre est également fonction des capacités de calcul de la machine qui doit effectuer les opérations arithmétiques correspondantes. Cette double dépendance conduit en pratique à réaliser un compromis difficile entre la qualité de l'analyse doppler souhaitée et le temps de calcul nécessaire pour obtenir le résultat.

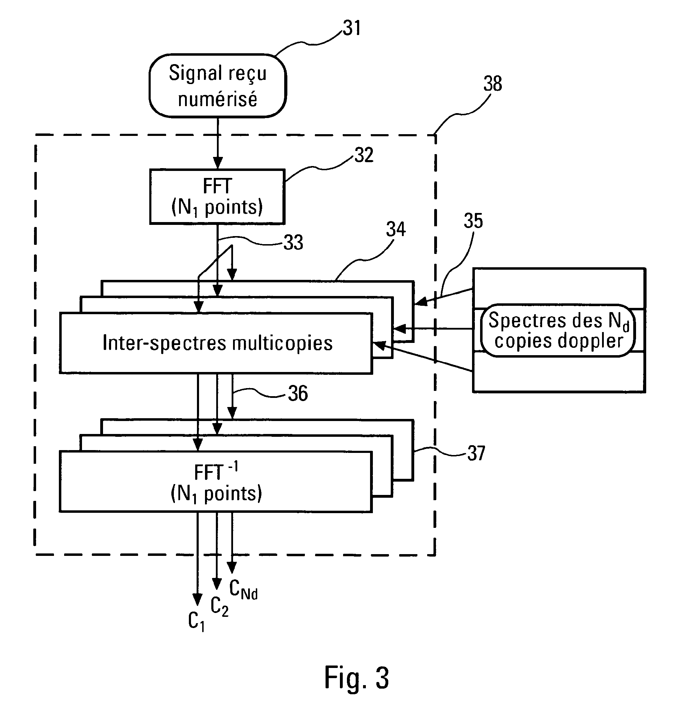

La figure 3 présente l'organigramme de principe d'un procédé classique de traitement par corrélation multicopies. Dans le but de limiter le nombre de calculs à effectuer, cette opération est réalisée dans le domaine fréquentiel. A cet effet le signal reçu et numérisé 31 subit par exemple une transformation temps-fréquence 32. Dans un mode préféré de réalisation la transformation temps fréquence est effectuée au moyen d'une transformation de Fourier (FFT) effectuée de manière glissante sur un nombre $N_1$ de points déterminé en fonction du nombre de canaux doppler souhaité. L'opération de FFT peut par exemple être effectuée de manière glissante sur un nombre $N_1 = 2 \cdot Fe \cdot T$ d'échantillons, avec un glissement égal à $F_e \cdot T$ échantillons d'une opération de FFT à la suivante. $F_e$ représente dans ce cas la fréquence d'échantillonnage et T la durée du signal reçu.

Le signal fréquentiel 33 ainsi obtenu fait ensuite l'objet de plusieurs opérations 34 simultanées de corrélation. Chaque opération consiste à calculer de manière connue l'inter spectre résultant du produit du spectre du signal reçu par le spectre d'un signal mémorisé 35, appelé copie doppler. Le spectre de chaque copie doppler correspond à celui du signal émis affecté d'une homothétie en fréquence. L'homothétie en fréquence correspond à un des canaux de la bande doppler analysée.

Chaque copie doppler peut être caractérisée par le paramètre doppler $\delta$ ayant pour expression $\delta = 1 \pm 2V/c$ dans laquelle V représente la vitesse radiale de la cible par rapport au bâtiment porteur et c la célérité du son dans le milieu. Par suite on peut écrire:

$$c(t) = e(\delta t) = a(\delta t) \sum_{n=0}^{N-1} p(\delta t - n\frac{T}{N}) \quad [5]$$

Et son spectre a pour expression :

$$C(f) = \frac{1}{|\delta|} \cdot A(f/\delta) * \sum_n P(f/\delta) \exp(-2i\pi nf\frac{T}{N}) = \sum_n P(\frac{nN}{T})A(\frac{f}{\delta} - n\frac{N}{T}) \quad [6]$$

L'expression de C(f) est analogue à celle de E(f), excepté que les raies qui le composent sont centrées sur les fréquences $\delta \cdot n \cdot N/T$. On assiste à une simple homothétie de spectre.

Le résultat 36 de chaque opération de corrélation est ensuite transposé dans le domaine temporel pour être exploité. La transposition est réalisée de préférence par la transformation 37 inverse de celle utilisée pour le passage dans le domaine fréquentiel, par une transformation fréquence-temps du type DFT inverse ou FFT inverse ou autre, effectuée sur $N_1$ échantillons ou points.

Comme dans le cas du signal émis, on constate que les spectres des copies doppler sont non nuls sur BT/N plages de fréquences correspondant aux raies du spectre du signal émis et translaté en fréquence. Comme pour le signal émis, la largeur de chaque raie est égale à $\beta/T$, les raies étant espacées de $\delta N/T$ sur l'axe des fréquences.

Effectuer le calcul de la corrélation multicopies, revient à effectuer $N_d$ opérations de corrélation simultanées, c'est à dire, dans le domaine spectral, $N_d$ opérations de multiplications inter spectres. Le passage dans le domaine spectral permet avantageusement de remplacer les opérations de corrélation temporelle qui se traduisent de manière connue par des sommes de produits, par de simples opérations de multiplication moins complexes et donc moins coûteuses en terme de charge de calcul. Néanmoins, s'agissant de $N_d$ opérations simultanées, la charge reste importante. On rappelle à ce propos que la charge de calcul est dimensionnée par le nombre $N_d$ de canaux doppler à traiter ainsi que par le produit BT où B représente la bande passante de l'impulsion élémentaire 11 et T la durée des N impulsions élémentaires constituant le signal émis.

L'organigramme de la figure 3 permet de mettre en évidence le poids relatif de chaque étape du procédé dans la charge de calcul globale à supporter. On constate ainsi que les étapes correspondant aux opérations 34 et 37 ont un poids très sensible dans la charge de calcul, tant par la quantité de calcul nécessitée par chaque opération que par leur exécution simultanée pour chacun des $N_d$ canaux doppler. En comparaison, l'étape correspondant à l'opération 32 d'analyse fréquentielle par FFT du signal reçu n'a qu'un poids relatif faible.

Dans le cas où la charge de calcul admissible ne permet pas de réaliser l'opération de corrélation multicopies telle que décrite, la méthode classique de traitement illustrée par la figure 3 n'offre à première vue que deux types de solutions. Une première solution consiste donc à diminuer le nombre de canaux doppler exploités simultanément ce qui permet de diminuer le nombre $N_d$ d'opérations de corrélation effectuées simultanément. L'autre solution consiste à limiter la bande passante occupée par l'impulsion élémentaire ce qui être incompatible des exigences liées aux fonctions de traitement de signal employées par ailleurs.

Face à ces contraintes, le procédé selon l'invention propose une solution alternative aux solutions mentionnées précédemment. A cet effet, le principe du procédé selon l'invention consiste principalement à considérer le spectre du signal émis comme un ensemble de spectres élémentaires constitué par les raies 21 qui compose le spectre global. Ces spectres élémentaires sont séparés par des plages de fréquence sans utilité dans le traitement doppler et pour lesquelles le niveau de signal est très faible. De même le signal reçu étant corrélé avec des copies décalées en doppler du signal émis, l'inter spectre obtenu comporte également des plages de fréquence pour lesquelles les composantes fréquentielles sont très faibles. Cette considération permet d'introduire la notion de bande passante efficace, qui peut être définie par la relation suivante:

$$B_{eff} = \frac{BT}{N} * \frac{\beta}{T} = \frac{\beta B}{N} \qquad [7]$$

Dans la relation précédente la bande efficace $B_{eff}$ est définie comme le produit BT/N du nombre de raies composant le spectre du signal par la largeur de spectre βB/N d'une raie.

La notion de bande passante efficace tel que définie ici, permet de prendre en compte le fait que l'ensemble des échantillons utiles pour effectuer une analyse doppler du signal reçu par corrélation numérique dans le domaine spectral, est contenu non pas dans B, mais dans $B_{eff}$.

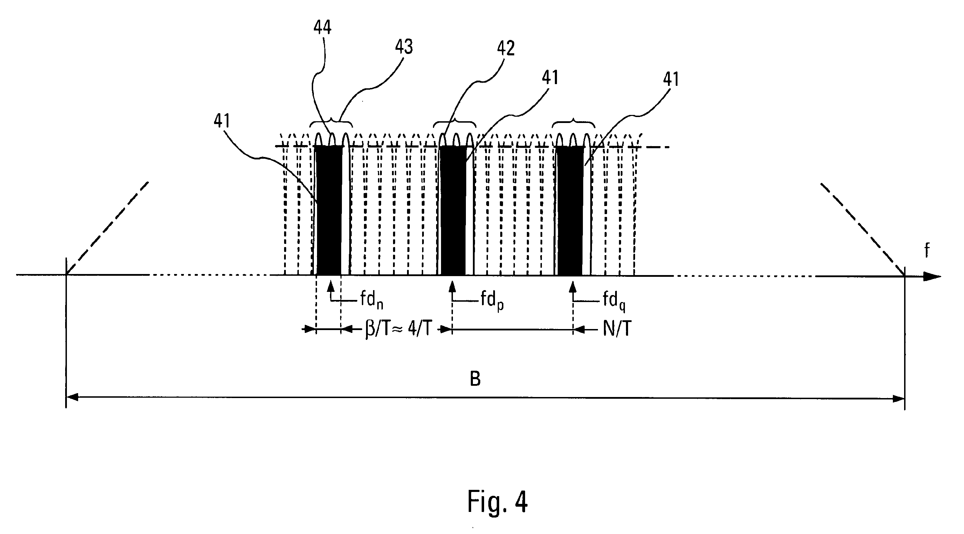

Le procédé selon l'invention met avantageusement à profit cette constatation pour diminuer la puissance de calcul nécessaire pour effectuer l'opération de corrélation multicopies. A cet effet le procédé selon l'invention fait intervenir une étape comportant une opération de concaténation de spectre. Cette opération a pour objet de substituer au signal reçu et à chaque copie doppler un signal synthétique dont le spectre est contenu dans une bande équivalant à la bande $B_{eff}$ définie précédemment. Pour chaque copie le spectre synthétisé comporte l'ensemble des composantes fréquentielles de niveau non nul du signal d'origine. L'illustration de la figure 4 permet d'expliciter de façon simple le rôle de l'étape de concaténation des spectres des copies doppler.

La figure 4 propose une vue partielle agrandie du spectre réel du signal, présenté à la figure 2. Sur cette figure sont uniquement représentées trois raies spectrales 41, qui sont des raies quelconques prises parmi les raies qui composent le spectre d'un signal tel que par exemple le signal émis par le sonar ou encore une de ses copies doppler. La figure 4 représente également une vue partielle de l'ensemble des canaux fréquentiels 42 définis par l'opération d'analyse fréquentielle réalisée sur le signal. Cette analyse fréquentielle peut être par exemple réalisée par une opération de type FFT.

L'étape de concaténation est effectuée simultanément par chaque copie Doppler, chacune présentant un spectre de raies différent. Elle peut être décomposée en un certain nombre d'opérations. Une première opération consiste à déterminer les canaux fréquentiels 42 coïncidant avec les raies 41 de position connue, qui composent le spectre de la copie. La bande spectrale occupée par chacune des raies est ainsi couverte par un ensemble 43 de canaux fréquentiels adjacents dont le nombre est notamment fonction de la résolution de l'analyse fréquentielle réalisée au préalable. Ce groupe de canaux doppler 43 comporte le nombre minimum de canaux nécessaires et sa largeur de spectre est en pratique sensiblement égale à celle de la raie 41 considérée.

De manière générale, comme l'illustre la figure 4, la bande spectrale occupée par une raie 41 du spectre du signal analysé n'est pas nécessairement centrée sur la fréquence centrale d'un canal fréquentiel. En outre, la largeur spectrale d'une raie est supérieure à la largeur d'un canal doppler. C'est pourquoi, pour couvrir la bande occupée par une raie il est nécessaire de considérer plusieurs canaux fréquentiels adjacents. Le nombre minimum de canaux nécessaires est déterminé par la largeur de la raie considérée et par la taille des canaux doppler.

Les groupes de canaux doppler adjacents 43 correspondant à chacune des raies étant ainsi déterminés, l'opération de concaténation proprement dite consiste à supprimer de la représentation spectrale du signal, les composantes situées dans des canaux fréquentiels intermédiaires qui ne font partie d'aucun groupe constitué, et à reconstituer une représentation spectrale du signal en juxtaposant les composantes restantes. Cette représentation peut être considérée comme celle du spectre efficace de la copie considérée.

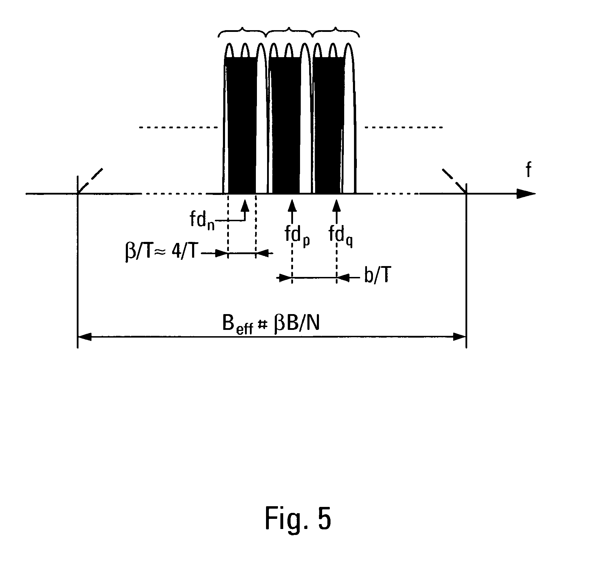

Comme le montre la figure 5, cette représentation spectrale se présente comme un ensemble de raies de largeur β/T, espacées les unes des autres d'un intervalle de fréquence b/T sensiblement égal à β/T. Cet intervalle est en réalité défini par le nombre de canaux fréquentiels conservés autour de chaque raie. L'ensemble du spectre ainsi reconstitué présente une largeur de spectre sensiblement égale à $\dfrac{\beta B}{N}$ .

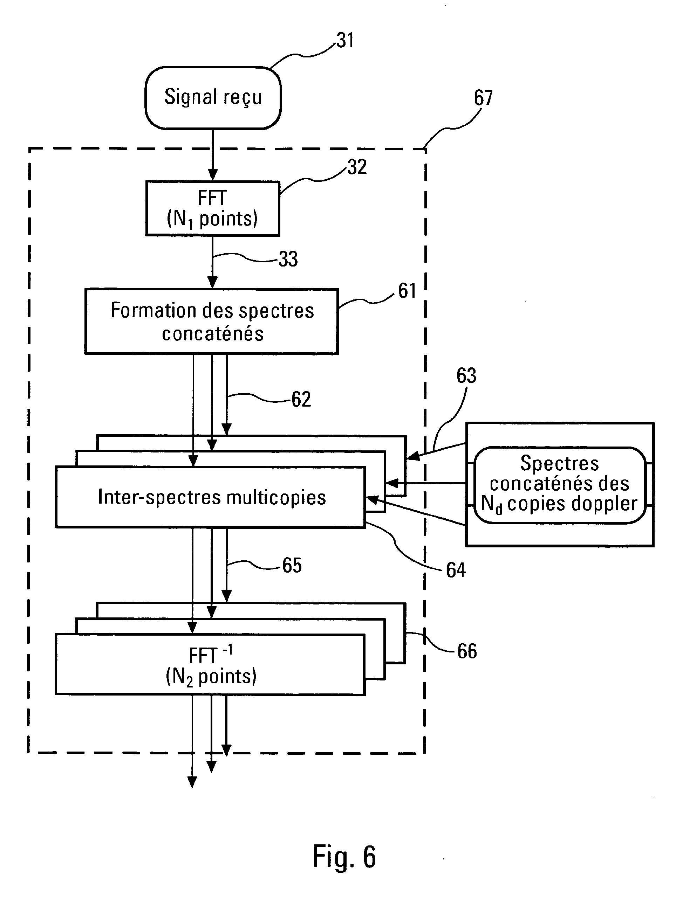

L'étape de concaténation telle que décrite permet ainsi avantageusement de réduire le spectre du ou des signaux à traiter. Le procédé selon l'invention utilise la concaténation de spectre de la façon illustrée par la figure 6 qui présente un organigramme des étapes que comporte le procédé.

Selon l'invention, le signal reçu subi une décomposition spectrale 32 de type FFT par exemple. La décomposition spectrale du signal reçu est de préférence identique à celle ayant servi pour établir les spectres des copies du signal reçu. Par ailleurs, on dispose sous forme de données mémorisées des spectres concaténés 63 des répliques fréquentiels du signal émis, chaque spectre concaténé comportant un ensemble de canaux fréquentiels déterminés. Ces canaux sont par exemple repérés par un numéro représentant leur numéro d'ordre dans la suite des canaux 42 qui couvre la bande B du signal.

Le spectre 33 du signal reçu 32, passe ensuite par une étape de formation de spectres concaténés 62, chaque spectre concaténé 62 regroupant les composantes fréquentielles situé dans les mêmes canaux fréquentiels que ceux retenus pour réaliser le spectre concaténé de la copie doppler 63 avec laquelle il doit être corrélé.

Le procédé comporte ensuite une étape de calcul d'inter-spectres 64 réalisée de manière classique, qui consiste comme précédemment à calculer de manière connue l'inter spectre résultant de chaque produit d'un spectre synthétique du signal reçu par le spectre conjugué correspondant de la copie doppler mémorisée 35 du signal émis. Le procédé selon l'invention réalise ainsi avantageusement chaque produit de spectres sur les spectres concaténés et non sur les spectres originaux. Les spectres concaténés comportant un nombre N2 de composantes spectrales, moindre que le nombre N1 des spectres originaux, l'opération de corrélation multicopies, induit une charge de calcul plus faible que dans le cas d'un procédé classique.

Les inter-spectres 65 obtenus traversent ensuite une étape 66 de transformation fréquence-temps, de type FFT inverse par exemple, pour restituer les signaux temporels représentant les produits de corrélation. Cette opération est réalisée simultanément sur tous les inter-spectres calculés à partir des spectres concaténés du signal reçu et des copies doppler.

Cette transformation inverse est semblable dans son principe à celles mises en oeuvre dans les procédés connus de l'art antérieur. Cependant il faut noter que, dans le cas d'une transformation par FFT inverse, l'opération est réalisée sur des inter-spectres comportant moins de composantes, ce qui réduit la taille des FFT à effectuer et donc la quantité de calculs nécessaires. Ces opérations de FFT sont réalisées sur le nombre $N_2$ d'échantillons fréquence que compte un inter-spectre ou, dans la pratique, sur un nombre $2^p$ d'échantillons correspondant au multiple de 2 le plus proche de ce nombre. Le nombre d'échantillons disponible est dans ce dernier cas complété par l'ajout d'échantillons égaux à zéros. Ainsi, comme pour l'étape de corrélation inter-spectres, l'effet de la concaténation se traduit par une réduction sensible du nombre d'opérations à effectuer l'ordre de grandeur de la réduction étant donné par le rapport N/β. L'analyse spectrale peut être effectuée plus généralement par une transformée de Fourrier discrète (DFT) ne portant pas nécessairement sur un nombre de point égal à une puissance 2.

Le procédé selon l'invention tel que décrit dans ce qui précède permet donc de diminuer sensiblement le nombre d'opérations arithmétiques nécessaires pour effectuer l'analyse doppler du signal reçu, dans la mesure où le signal émis présente un spectre de raies et où il est affecté d'une pondération permettant de limiter la largeur spectrale de chaque raie. La diminution porte avantageusement sur les étapes de corrélation et de transformation fréquence-temps qui sont les étapes dimensionnantes du procédé en terme de charge de calcul.

Ce procédé présente l'avantage d'être particulièrement adapté aux signaux provenant d'émissions se présentant sous la forme temporelle comme une rafale de N impulsions consécutives, chaque impulsion étant modulée en fréquence sur une bande B autour d'une fréquence $f_0$.

**Revendications**

1. Procédé de traitement doppler d'échos de signaux émis, ces signaux émis présentant un spectre de raies, **caractérisé en ce qu'**il effectue une corrélation multicopies du signal reçu, cette corrélation multicopies comportant au moins les étapes suivantes:

     - une étape (32) de transformation temps-fréquence du signal reçu,
     - une étape (61) de formation de spectres synthétiques par concaténation, à partir du spectre du signal reçu,
     - une étape (64) de calcul du produit inter-spectres, c'est à dire du produit de chaque spectre synthétique par le spectre conjugué concaténé de la copie doppler correspondante
- une étape (66) de transformation fréquence temps des produits inter-spectres.

**2.** Procédé selon la revendication 1, **caractérisé en ce que** pour chaque copie doppler, le spectre concaténé de ladite copie est obtenu en sélectionnant pour chaque raie composant le signal le canal fréquentiel le plus proche de la position de la raie, en sélectionnant également les canaux fréquentiels adjacents, en supprimant les autres canaux fréquentiels et en concaténant les plages de fréquence correspondant aux canaux fréquentiels sélectionnés.

**3.** Procédé selon une des revendications 1 ou 2, **caractérisé en ce que** chaque spectre synthétique est obtenu en sélectionnant et en concaténant les plages de fréquence correspondant aux canaux fréquentiels sélectionnés pour former le spectre concaténé de la copie doppler correspondante.

**4.** Procédé selon l'une quelconque des revendications 1 à 3, **caractérisé en ce que** les transformations fréquence-temps (66) des produits inter-spectres, sont réalisées au moyen d'une FFT inverse effectuée sur un nombre $N_2$ d'échantillons égal au nombre de canaux fréquentiels composant les copies Doppler.

**5.** Procédé selon la revendication 4, **caractérisé en ce que** la FFT inverse est effectuée sur un ensemble de M échantillons constitués par les $N_2$ échantillons correspondant aux canaux fréquentiels du spectre concaténé aux quels on ajoute $M-N_2$ échantillons nuls de sorte que M soit égale à la puissance de deux immédiatement supérieur à $N_2$.

**Claims**

**1.** Method for the doppler processing of echos of emitted signals, these emitted signals having a line spectrum, **characterized in that** it performs a multicopy correlation of the received signal, this multicopy correlation comprising at least the following steps:

- a step (32) for the time-frequency transformation of the received signal;
- a step (61) for the formation of synthetic spectra by concatenation, starting from the spectrum of the received signal;
- a step (64) for the computation of the inter-spectral product, in other words of the product of each synthetic spectrum with the concatenated conjugate spectrum of the corresponding doppler copy; and
- a step (66) for the frequency-time transformation of the inter-spectral products.

**2.** Method according to Claim 1, **characterized in that**, for each doppler copy, the concatenated spectrum of said copy is obtained by selecting, for each spectral line making up the signal, the frequency channel closest to the position of the line, by also selecting the adjacent frequency channels, by eliminating the other frequency channels and by concatenating the frequency ranges corresponding to the selected frequency channels.

**3.** Method according to either of Claims 1 and 2, **characterized in that** each synthetic spectrum is obtained by selecting and by concatenating the frequency ranges corresponding to the selected frequency channels in order to form the concatenated spectrum of the corresponding doppler copy.

**4.** Method according to any one of Claims 1 to 3, **characterized in that** the frequency-time transformations (66) of the inter-spectral products are performed by means of an inverse FFT carried out on a number $N_2$ of samples equal to the number of frequency channels making up the Doppler copies.

**5.** Method according to Claim 4, **characterized in that** the inverse FFT is performed on a set of M samples formed by the $N_2$ samples corresponding to the frequency channels of the concatenated spectrum to which channels $M - N_2$ zero samples are added such that M is equal to the power of two immediately above $N_2$.

**Patentansprüche**

**1.** Doppler-Bearbeitungsverfahren von Echos von entsandten Signalen, wobei diese entsandten Signale ein Linienspektrum aufweisen, **dadurch gekennzeichnet, dass** es eine Mehrkopienkorrelation des empfangenen Signals durchführt, wobei diese Mehrkopienkorrelation mindestens die folgenden Schritte umfasst:

- einen Schritt (32) der Zeit-Frequenz-Umformung des empfangenen Signals,
- einen Schritt (61) der Bildung von synthetischen Spektren durch Aneinanderreihung ausgehend vom Spektrum des empfangenen Signals,
- einen Schritt (64) der Berechnung des Interspektralproduktes, d.h. des Produktes jedes synthetischen Spektrums mittels dem zugehörigen aneinander gereihten Spektrum der entsprechenden Doppler-Kopie,
- einen Schritt (66) der Frequenz-Zeit-Umformung der Interspektralprodukte.

2. Verfahren nach Anspruch 1, **dadurch gekennzeichnet, dass** für jede Doppler-Kopie das aneinander gereihte Spektrum der Kopie erhalten wird, wobei für jede Linie, aus der sich das Signal zusammensetzt, der nächste Frequenzkanal zur Position der Linie ausgewählt wird, wobei auch die angrenzenden Frequenzkanäle ausgewählt werden, wobei die anderen Frequenzkanäle weggelassen und die Frequenzbereiche, die den ausgewählten Frequenzkanälen entsprechen, aneinander gereiht werden.

3. Verfahren nach einem der Ansprüche 1 oder 2, **dadurch gekennzeichnet, dass** jedes synthetische Spektrum erhalten wird, wobei die Frequenzbereiche, die den ausgewählten Frequenzkanälen entsprechen, ausgewählt und aneinander gereiht werden, um das aneinander gereihte Spektrum der entsprechenden Doppler-Kopie zu bilden.

4. Verfahren nach einem der Ansprüche 1 bis 3, **dadurch gekennzeichnet, dass** die Frequenz-Zeit-Umformungen (66) der Interspektralprodukte mit Hilfe einer inversen FTT erfolgen, die an einer Anzahl $N_2$ von Mustern gleich der Anzahl von Frequenzkanälen, aus denen die Doppler-Kopien bestehen, durchgeführt wird.

5. Verfahren nach Anspruch 4, **dadurch gekennzeichnet, dass** die inverse FTT an einer Gesamtheit von M Mustern durchgeführt wird, die von den $N_2$ Mustern entsprechend den Frequenzkanälen des aneinander gereihten Spektrums gebildet sind, zu denen M-$N_2$ Nullmuster hinzugefügt werden, so dass M gleich der Leistung von zwei unmittelbar größer als $N_2$ ist.

Fig. 1

Fig. 2

**31** Signal reçu numérisé

**32** FFT (N₁ points)

**33**

**34**

**35**

**38**

Inter-spectres multicopies

Spectres des N_d copies doppler

**36**

**37**

FFT⁻¹ (N₁ points)

$C_1$  $C_2$  $C_{Nd}$

Fig. 3

Fig. 4

Fig. 5

31

Signal reçu

67

32

FFT
(N₁ points)

33

61

Formation des spectres
concaténés

62

63

Inter-spectres multicopies

Spectres
concaténés des
N_d copies doppler

64

65

66

FFT⁻¹
(N₂ points)

Fig. 6

**EP 1 615 049 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1078280 A
- FR 0304042
- FR 2853417